# EUROPEAN PATENT APPLICATION

(11) **EP 2 316 301 A1**
(43) Date of publication of application: **04.05.2011**
(21) Application number: 10014254.6
(22) Date of filing: 03.11.2010
(51) Int. Cl.: A45C 13/28, G01G 19/58, A45C 13/00

(54) **Balance for a luggage case**

(30) Priority: 03.11.2009 TW 98137226
(71) Applicant: Pegatron Corporation, Taipei City 112 (TW)
(72) Inventor: Wu, Po-Yu, Beitou District Taipei City Taaiwan (CN); Wang, Chun-Yuan, Beitou District Taipei City Taaiwan (CN); Lu, Chih-Hao, Beitou District Taipei City Taaiwan (CN); Yang, Shun-Yu, Beitou District Taipei City Taaiwan (CN); Lee, Cheng-Yi, Beitou District Taipei City Taaiwan (CN); Chen, Hsiao-Cheng, Beitou District Taipei City Taaiwan (CN)
(74) Representative: Schmitz, Hans-Werner

(57) **Abstract**

This invention provides a luggage case accessory for measuring weight of a luggage case. In the invention, the luggage case accessory includes a main body (10), a weight sensing unit (14), a control unit (16), and an output unit (18). The main body has an embedding structure (10b) for being detachably embedded with a handle. The weight sensing unit is disposed in the main body for sensing weight borne by the handle to output a weight signal. The control unit is coupled with the weight sensing unit for receiving the weight signal and outputting a control signal according to the weight signal. The output unit is coupled with the control unit for receiving the control signal and outputting a weight state of the luggage case according to the control signal.

## Description

### CROSS-REFERENCE TO RELATED APPLICATIONS

This Non-provisional application claims priority under 35 U.S.C. §119(a) on Patent Application No(s). 98137226 filed in Taiwan, Republic of China on Nov. 3, 2009, the entire contents of which are hereby incorporated by reference.

### BACKGROUND OF THE INVENTION

### Field of the Invention

This invention relates to a luggage case accessory and, more particularly, to a luggage case accessory capable of measuring weight of a luggage case.

### Description of the Related Art

Each airline company has explicit weight regulations to luggage of travelers when the travelers travel by airplane. In recent years, increase of transportation cost such as fuel cost causes great losses in aircraft industry. To save cost and increase income, each airline company makes stricter weight limiting regulations to unaccompanied luggage of the travelers.

Generally most families have platform weighing devices for measuring weight, and the platform weighing devices can be used for measuring weight of the luggage before travel. However, the above weighing devices have greater weight and volume, which does not facilitate carrying and using during a journey. However, a general hanging spring weighing device facilitating carrying may still occupy certain volume and weight of a luggage case. Further, the hanging spring weighing device can only be designed aiming at basic mechanism needs, and it fails to be integrated into a conventional travelling product. In addition, the hanging spring weighing device needs to be read by users in use without a convenient design such as overweight reminder and so on.

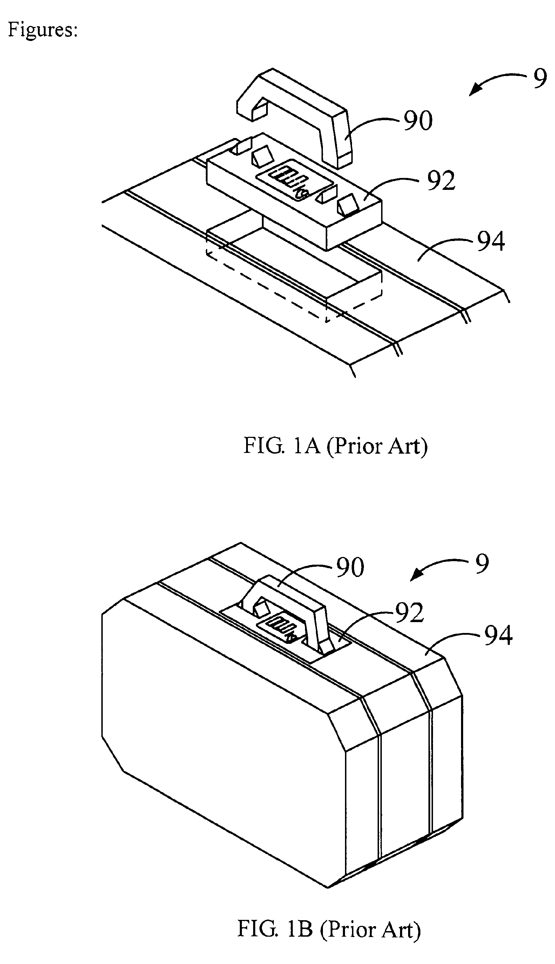

To solve the problem, a product combined with a weighing device and a luggage case is gradually developed. FIG. 1A and FIG. 1B are schematic diagrams showing a conventional weighable luggage case 9. The weighable luggage case 9 includes a handle 90, a weighing device 92, and a case body 94. The handle 90 is combined with the weighing device 92, and the weighing device 92 is embedded with an outer surface of the case body 94.

A screen is disposed at the weighing device 92. Thereby, after the weighable luggage case 9 is lifted, the weighing device 92 can measure weight of the case body 94 and objects therein, and the measured weight can be displayed at the screen of the weighing device 92.

### BRIEF SUMMARY OF THE INVENTION

One scope of this invention is to provide a luggage case accessory facilitating measuring weight of a luggage case.

According to one embodiment, a luggage case accessory is used in a luggage case, and the luggage case has a handle. In addition, the luggage case accessory includes a main body, a sensing unit, a control unit, and an output unit. The main body has an embedding structure for being detachably embedded with the handle. The weight sensing unit is disposed in the main body for sensing weight borne by the handle to output a weight signal. The control unit is coupled with the weight sensing unit for receiving the weight signal and outputting a control signal according to the weight signal. In addition, the output unit is coupled with the control unit for receiving the control signal and outputting a weight state of the luggage case according to the control signal.

To sum up, in the invention, the luggage case accessory may detachably be fastened to the handle of the luggage case via the embedding structure. When the luggage case accessory is lifted with the handle of the luggage case, the luggage case accessory measures the weight of the luggage case. In addition, the luggage case accessory in the invention may be sleeved on the luggage case via a string or a retaining ring. The luggage case accessory can be taken away to facilitate daily storage and carryingand measure weight of other luggage cases.

These and other features, aspects, and advantages of the present invention will become better understood with regard to the following description, appended claims, and accompanying drawings.

### BRIEF DESCRIPTION OF THE DRAWINGS

FIG. 1A and FIG. 1B are schematic diagrams showing a conventional weighable luggage case;

FIG. 2 is a schematic diagram showing a luggage case accessory according to one embodiment of the invention;

FIG. 3 is a bottom view showing the luggage case accessory in FIG. 2;

FIG. 4 is a partial sectional schematic diagram showing the luggage case accessory in FIG. 3 along a line A-A;

FIG. 5 is a functional block diagram showing a luggage case accessory according to one embodiment of the invention; and

FIG. 6 is a schematic diagram showing a luggage case according to one embodiment of the invention.

### DETAILED DESCRIPTION OF THE INVENTION

This invention provides a luggage case accessory used in a luggage case for measuring weight of the luggage case. The embodiments of the luggage case accessory are described hereinbelow.

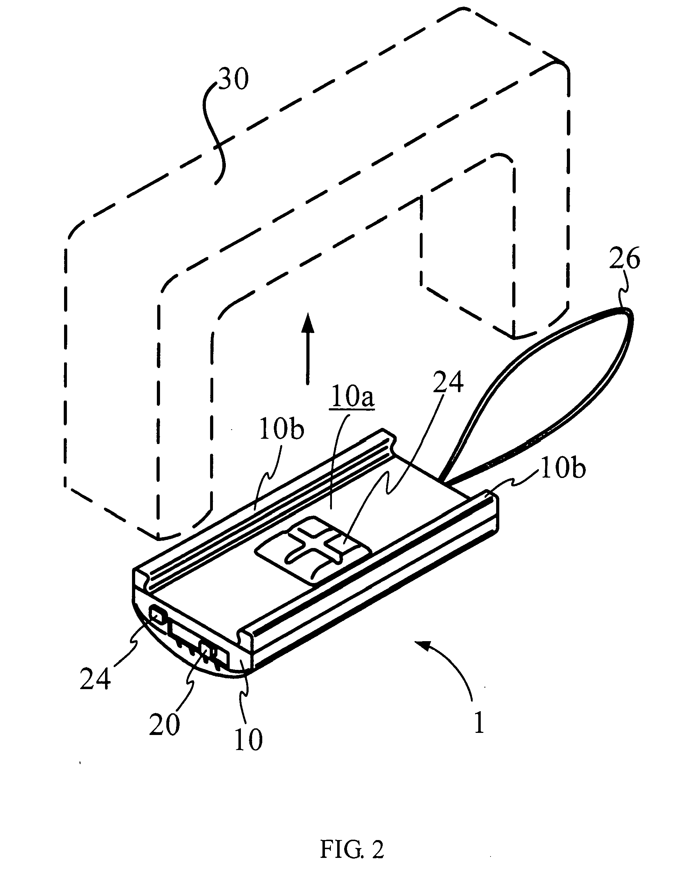

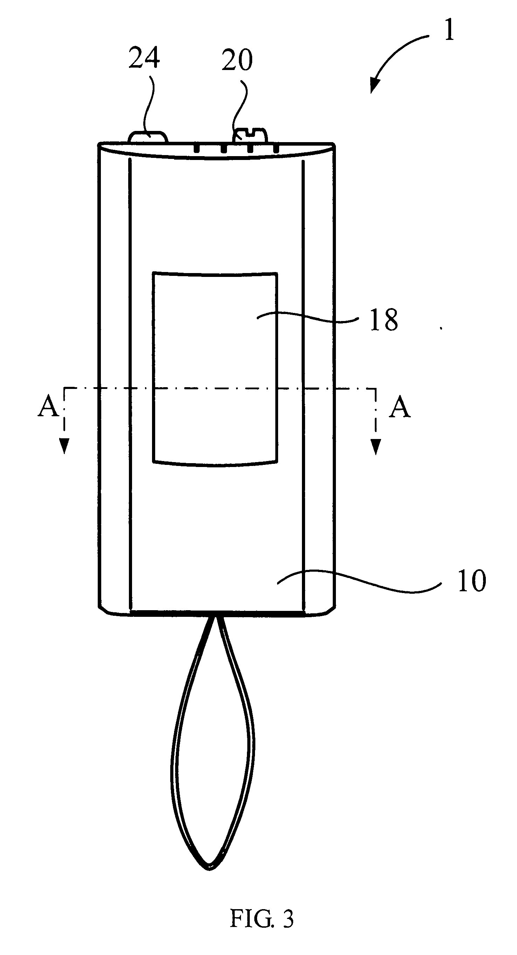

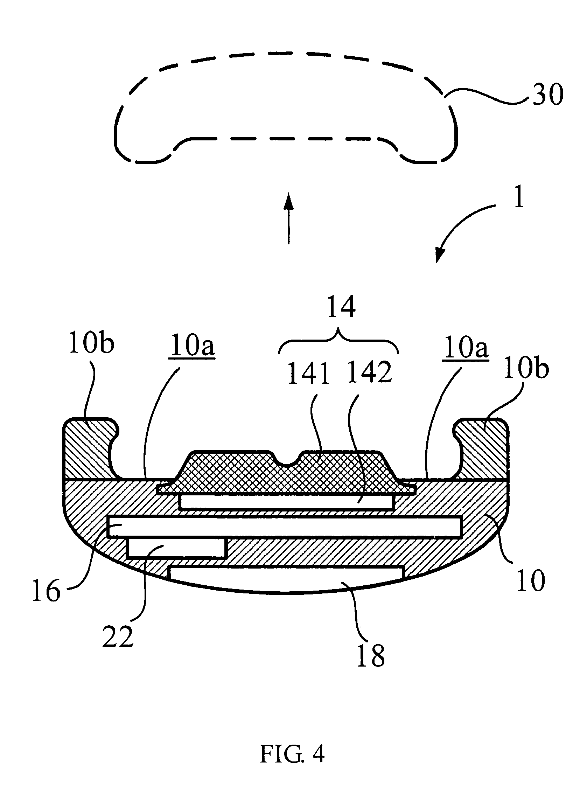

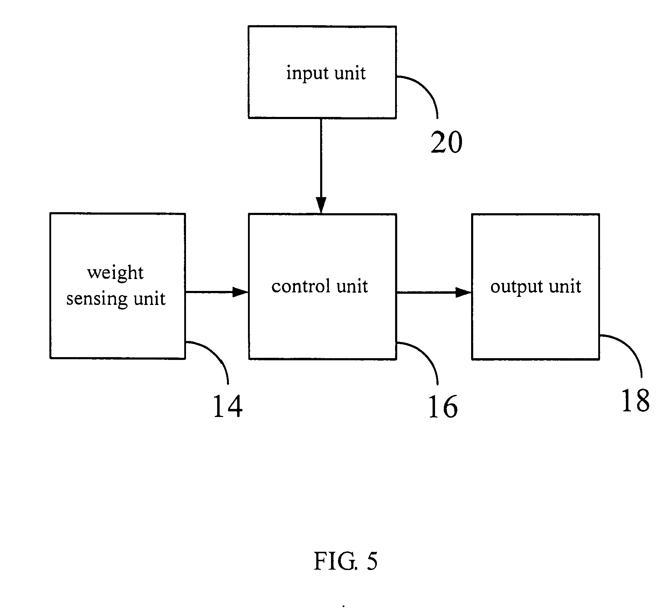

Please refer to FIG. 2 to FIG. 5 together. FIG. 2 is a schematic diagram showing a luggage case accessory according to one embodiment of the invention. FIG. 3 is a bottom view showing the luggage case accessory in FIG. 2. FIG. 4 is a partial sectional diagram showing the luggage case accessory in FIG. 3 along a line A-A. FIG. 5 is a functional block diagram showing a luggage case accessory according to one embodiment of the invention.

In the embodiment of the invention, a luggage case accessory 1 includes a main body 10, a weight sensing unit 14, a control unit 16, an output unit 18, an input unit 20, a power supply unit 22, a switch device 24, and a sling 26.

The main body 10 has a contacting surface 10a and an embedding structure 10b, and the embedding structure 10b is detachably embedded with a handle 30 of a luggage case. When a user is to use the luggage case accessory 1 to measure the weight of the luggage case, the embedding structure 10b is embedded with the handle 30 of the luggage case to allow the contacting surface 10a to contact the handle 30. When the weight of the luggage case does not need to be measured, the embedding structure 10b isdetached from the handle 30 to allow the luggage case accessory 1 to be taken away, and the contacting surface 10a also does not need to contact the handle 30.

Further, the embedding structure 10b assist in stabling the luggage case accessory 1 combined with the handle 30 to increase accuracy of the weight measurement during measuring. In addition, when the luggage case accessory 1 is not used to measure the weight of the luggage case, the luggage case accessory 1 may be fastened to the luggage case. The embedding structure 10b is not limited to a specific shape. The embedding structure 10b have different designs according to the shape of the handle 30, as long as the main body 10 is fastened to the handle 30. The embedding structure 10b may further include magnetic objects such as magnets for cooperating with the metal handle 30.

The weight sensing unit 14 is disposed in the main body 10 and is adjacent to the contacting surface 10a. Thereby, the contacting surface 10a transmits the borne weight of the luggage case to the weight sensing unit 14, and then the weight sensing unit 14 outputs a weight signal to the control unit 16 according to the borne weight. In the embodiment, the weight sensing unit 14 includes a protection pad 141 and a strain gauge 142. The protection pad 141 covers the strain gauge 142 and is one portion of the contacting surface 10a. The protection pad 141 may be a hard or soft pad, as long as the protection pad 141 transmits the weight of the luggage case to the strain gauge 142 and protect the strain gauge 142 as well. The protection pad 141 may be a soft rubber sheet.

The strain gauge 142 may be a resistance strain gauge or a piezoelectric strain gauge. The resistance strain gauge uses pressure to deform inner structures and changes resistance of the inner material via the deformation to measure the resistance change to obtain the borne pressure and to obtain the borne weight. The piezoelectric strain gauge uses a piezoelectric material to measure pressure. When the pressure is exerted, the piezoelectric material generates an electrode change, and the borne pressure and weight are obtained by measuring the electrode change.

The control unit 16 is disposed in the main body 10 and is coupled with the weight sensing unit 14 to receive the weight signal. The control unit 16 outputs a control signal to the output unit 18 according to the received weight signal. In detail, the control unit 16 processes the received weight signal to convert the weight signal into a practical weight value and a weight unit of the luggage case and output the control signal including the information such as the weight value and the weigh unit to the output unit 18, thus allowing the output unit 18 to output the weight value and the weight unit of the luggage case.

In addition, the control unit 16 may store a predetermined weight value and determine whether a present weight value represented by the weight signal is greater than the predetermined weight value. For example, if the control unit 16 determines that the present weight value is smaller than the predetermined weight value, the control signal may be not outputted. If the control unit 16 determines that the present weight value is greater than the predetermined weight value, the control signal may be outputted to the output unit 18 thus to warn the user that the luggage case is in an overweight state. Further, for example, when the present weight value is not greater than the predetermined weight value, the control unit 16 outputs different control signals according to the difference between the present weight value and the predetermined weight value.

The output unit 18 is coupled with the control unit 16 for receiving the control signal and outputting a weight state of the luggage case according to the control signal. In FIG. 3, in the embodiment, the output unit 18 includes a display unit disposed at a surface of the main body 10 for displaying the weight value and the weight unit of the luggage case. For example, the display unit may be a liquid crystal display or an organic light-emitting display.

In other embodiments, the output unit 18 may be a light-emitting unit. The control unit 16 may output a control signal to the light-emitting unit according to the weight signal thus to allow the light-emitting unit to glitter in a corresponding frequency. For example, if the measured present weight value of the luggage case is smaller than the predetermined weight value, the light-emitting unit may not light. If the present weight value is greater than one half of the predetermined weight value, the light-emitting unit may glitter in the slower frequency. If the present weight value extremely approaches to the predetermined weight value, the light-emitting unit may glitter in the quicker frequency. If the present weight value is greater than the predetermined weight value, the light-emitting unit may not glitter and may continue lighting.

In addition, the light-emitting unit may emit light with different colors according to the control signal. For example, if the present weight value is smaller than and does not approach to the predetermined weight value, the light-emitting unit may emit green light. If the present weight value approaches to the predetermined weight value, the light-emitting unit may emit yellow light. If the present weight value is greater than the predetermined weight value, the light-emitting unit may emit red light.

In addition, in other embodiments, the output unit 18 may be a buzzer disposed at a surface of the main body 10 or disposed in the main body 10. The control unit 16 may output a control signal to the buzzer according to the weight signal, to allow the buzzer to emit alarm sound with a corresponding interval and length. For example, if the present weight value is smaller than and does not approach to the predetermined weight value, the buzzer emits the buzzer sound with the longer interval and length. When the present weight value approaches to the predetermined weight value, the buzzer may emit the buzzer sound with the shorter interval and length. When the present weight value is greater than the predetermined weight value, the buzzer may emit the continuous buzzer sound without intervals.

In an operation method for using the luggage case accessory 1 to measure weight of a luggage case, first, after the contacting surface 10a is disposed upwards, the main body 10 is against a lower edge of the handle 30. Then, the handle 30 and the luggage case are lifted by exerting force on the main body 10 of the luggage case accessory 1 thus to allow the contacting surface 10a of the main body 10 to contact the handle 30 and to transmit the borne weight of the luggage case to the weight sensing unit 14. The strain gauge 142 of the weight sensing unit 14 measures the weight of the luggage case and outputs a weight signal. The control unit 16 outputs a control signal according to the weight signal, and the output unit 18 outputs a weight state of the luggage case according to the control signal in the displaying mode, the light-emitting mode, or the sound-emitting mode, thereby completing weight measuring of the luggage case.

The input unit 20 is disposed at the main body 10 and is coupled with the control unit 16 for adjusting a predetermined weight value stored by the control unit 16. In the embodiment, the input unit 20 may be a movable twisting button. The user adjusts the twisting button to a corresponding place to adjust the predetermined weight value actually needed. For example, the scale corresponding to the twisting button may include 20 kg, 30 kg, 40 kg and so on. When the user is to travel by an airliner where the weight of the luggage case is limited to 20 kg, the user can twist the twisting button to 20 kg then to measure. When the weight of the luggage case exceeds 20 kg, the luggage case accessory 1 may warn.

In other embodiments, the luggage case accessory 1 may have a plurality of twisting buttons. Besides adjusting the predetermined weight value, the twisting buttons may also be used for adjusting a using weight unit.

The power supply unit 22 is disposed in the main body 10 and is coupled with the weight sensing unit 14, the control unit 16, and the output unit 18 for providing power needed by operation of each element. The power supply unit 22 may be a rechargeable lithium battery or a rechargeable nickel-metal hydride battery, and it may also be a disposable dry battery,

The switch device 24 is disposed at a surface of the main body 10 and is coupled with the power supply unit 22. The switch device 24 may control whether the power supply unit 22 provides power, thereby controlling an on-off state of the luggage case accessory 1.

The sling 26 is connected with the main body 10, and it assists the luggage case accessory 1 in the invention in hanging at the luggage case. For example, the sling may be tied at the handle 30 of the luggage case to assist the luggage case accessory 1 in hanging at the luggage case. In addition, the luggage case accessory 1 in the embodiment can also include an identification card where users write information such as name, address, telephone and so on, or the luggage case accessory 1 includes a transparent slot for containing the identification card.

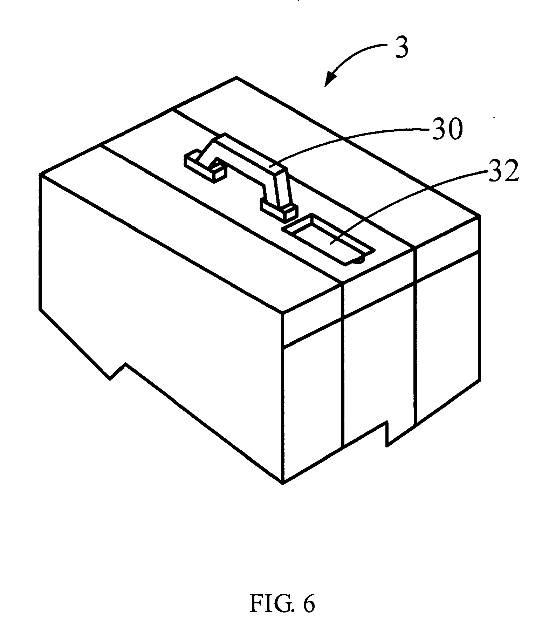

FIG. 6 is a schematic diagram showing a luggage case 3 according to one embedment of the invention. In FIG. 6, the luggage case 3 cooperating with the luggage case accessory 1 has a containing groove 32 disposed adjacent to the handle 30 for containing the luggage case accessory 1. Certainly, the containing groove 32 may also be disposed at other positions of the luggage case 3, and it may even be disposed at an inner wall of the luggage case 3.

To sum up, the luggage case accessory in the invention can be fastened to the handle of the luggage case via the embedding structure, and when the luggage case accessory is lifted with the handle of the luggage case, the luggage case accessory measures the weight of the luggage case. The luggage case accessory in the invention may be sleeved on the luggage case via a string or a retaining ring. The luggage case accessory is taken away to facilitate storage, carrying or measuring weight of other luggage cases.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A luggage case accessory used in a luggage case, the luggage case having a handle, the luggage case accessory comprising:
a main body having an embedding structure for being detachably embedded with the handle;
a weight sensing unit disposed in the main body, the weight sensing unit sensing weight borne by the handle to output a weight signal;
a control unit coupled with the weight sensing unit for receiving the weight signal and outputting a control signal according to the weight signal; and
an output unit coupled with the control unit for receiving the control signal and outputting a weight state of the luggage case according to the control signal.

2. The luggage case accessory according to claim 1, wherein the weight sensing unit comprises a protection pad and a strain gauge, the protection pad covers the strain gauge, and the protection pad forms a contacting surface.

3. The luggage case accessory according to claim 2, wherein the protection pad is a soft rubber sheet.

4. The luggage case accessory according to claim 2, wherein the strain gauge is a resistance strain gauge or a piezoelectric strain gauge.

5. The luggage case accessory according to claim 1, wherein the output unit includes a display unit for displaying a weight value and a weight unit of the luggage case.

6. The luggage case accessory according to claim 1, wherein the control unit stores a predetermined weight value, and when a present weight value represented by the weight signal is greater than the predetermined weight value, the control unit outputs the control signal.

7. The luggage case accessory according to claim 6, further comprising an input unit coupled with the control unit for adjusting the predetermined weight value of the luggage case accessory.

8. The luggage case accessory according to claim 1, wherein the output unit is a light-emitting unit, and the control unit outputs the control signal to the light-emitting unit according to the weight signal thus to allow the light-emitting unit to glitter in a corresponding frequency.

9. The luggage case accessory according to claim 1, wherein the output unit is a buzzer, and the control unit outputs the control signal to the buzzer according to the weight signal thus to allow the buzzer to emit alarm sound with a corresponding interval and length.

10. The luggage case accessory according to claim 1, further comprising a power supply unit coupled with the weight sensing unit, the control unit, and the output unit for providing operation power.

11. The luggage case accessory according to claim 10, further comprising a switch device coupled with the power supply unit for switching an on-off state of the luggage case accessory.

12. The luggage case accessory according to claim 1, further comprising a sling connected with the main body and capable of hanging at the luggage case.

13. The luggage case accessory according to claim 1, wherein the luggage case has a containing groove for containing the luggage case accessory.
